Europäisches Patentamt

European Patent Office

Office européen des brevets

(11) Publication number: **0 121 506**
**B1**

## (12) EUROPEAN PATENT SPECIFICATION

(45) Date of publication of patent specification: **04.11.87**

(21) Application number: **84850048.4**

(22) Date of filing: **10.02.84**

(51) Int. Cl.⁴: **B 62 D 1/18**

(54) Adjustable steering column support.

(30) Priority: **23.02.83 SE 8301001**

(43) Date of publication of application:
**10.10.84 Bulletin 84/41**

(45) Publication of the grant of the patent:
**04.11.87 Bulletin 87/45**

(84) Designated Contracting States:
**AT BE CH DE FR GB IT LI LU NL**

(56) References cited:
**EP-A-0 058 495**
**DE-B-1 780 061**
**FR-A-1 581 191**
**FR-A-2 360 454**
**US-A-3 570 322**

(73) Proprietor: **Affärsverket FFV**
**Tullgatan 8**
**S-631 87 Eskilstuna (SE)**

(72) Inventor: **Andersson, Henry**
**Blahammarvägen 12**
**S-132 00 Saltsjö Boo (SE)**

(74) Representative: **Avellan-Hultman, Olle**
**Avellan-Hultman Patentbyra AB P.O. Box 5366**
**S-102 46 Stockholm 5 (SE)**

Courier Press, Leamington Spa, England.

**Description**

The present invention relates to a tiltable and telescopic steering column support comprising a support part which is fixedly mounted on the vehicle, a carrier for the steering column, which is both tiltable and telescopic in relation to said fixed support part, and locking means and a releasing means for respectively locking and releasing the carrier and the fixed support part in relation to each other, in which the fixed support part is formed with a first set of locking plates including two or more locking plates, and the steering column carrier is formed with a second set of locking plates including three or more locking plates or vice versa, and in which the said first and second sets of locking plates are interleaved for cooperation, said locking means comprising a spring means, the interleaved and cooperating locking plates in the normal non-operated condition being acted on by a spring means which compresses the interengaged locking plates and thereby provides a locking engagement between the fixed support part and the steering column carrier, said releasing means, when actuated, forcing said spring means in a direction for disengaging the locking plates on such operation and thereby releasing the steering column carrier from the support part, and in which the apparatus comprises means for enabling a displacement of the steering column carrier longitudinally and angularly in relation to the support part upon actuation of said releasing means, according to the precharacterising portion of claim 1.

EP—A—58.495 discloses an adjustable steering column support of the above mentioned type having a friction brake which is normally engaged by the actuation of a set of disc springs but which can be released by the actuation of a releasing bar over a lever. The disc springs which directly compress friction brakes of the adjustable steering column support must be of a rather great spring force in order to guarantee that the steering column does not unintentionally move from the set position, and hence there is a need for a rather stong releasing force to counteract the force of the disc springs. Also, the force of the springs compressing the friction plates may be considered restricted in view of the necessary releasing force.

The present invention therefore intends to solve the problem of providing an adjustable steering column support, which is designed so that only a relatively slight actuation force is needed for counteracting the force of the springs compressing the friction plates of the apparatus, and in which apparatus it is possible to use higher spring forces, thereby providing higher friction forces than has previously been possible while still using simple lever arms for releasing said spring force.

According to the invention the fixed support part and the steering column carrier are formed as two mirror-symmetrical halves, which are interconnected for a maximum mutual distance by means of bolts, the locking means and the actuation means being interposed between said two halves, and said locking means comprises a wedge means which is disposed between the two mirror-symmetrical halves of the fixed support part and the steering column carrier, said wedge means having two outer wedges, which are mounted non-displacable in the longitudinal direction of said wedges in relation to the releasing means, and an intermediate wedge which is pressed in the direction towards the outer wedges by a spring means, whereby said wedges provide a compressing of the locking plates of the fixed support part and the steering column carrier, according to the characterizing portion of claim 1.

Further characteristics of the invention and advantages thereof evident from the subclaims and from the following description of an embodiment of the invention.

Now the invention is to be described more in detail with reference to the accompanying drawings. It is, however, to be understood that the embodiments of the invention shown in the drawings are only illustrating examples and that the invention is only restricted by the appended claims.

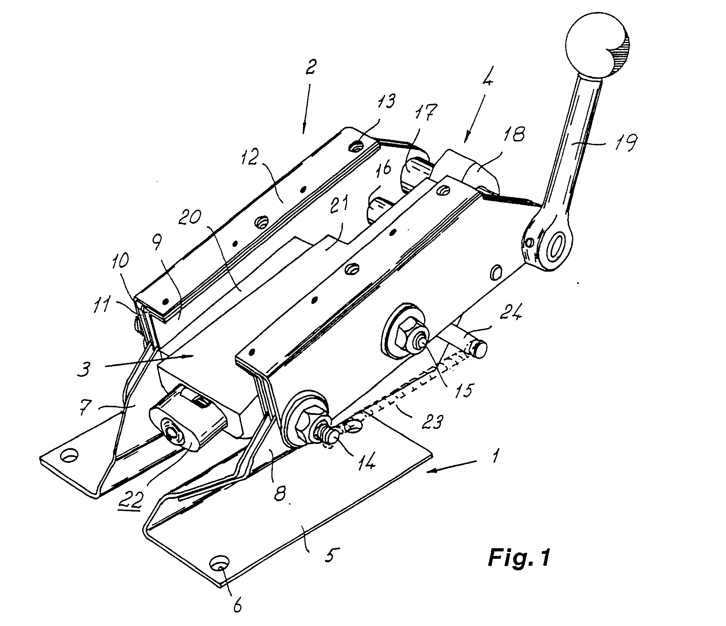

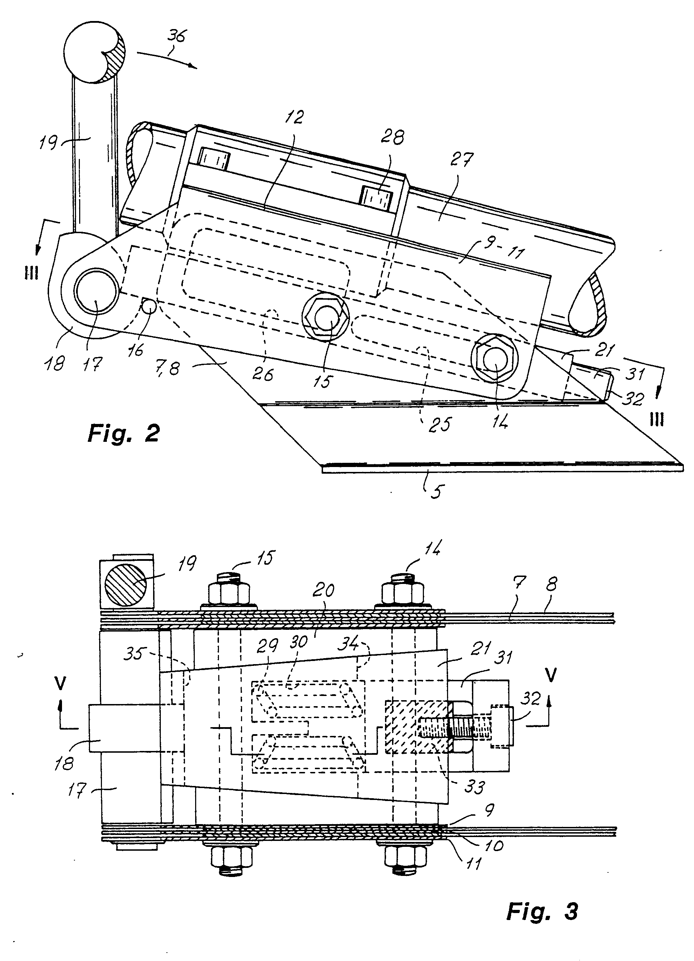

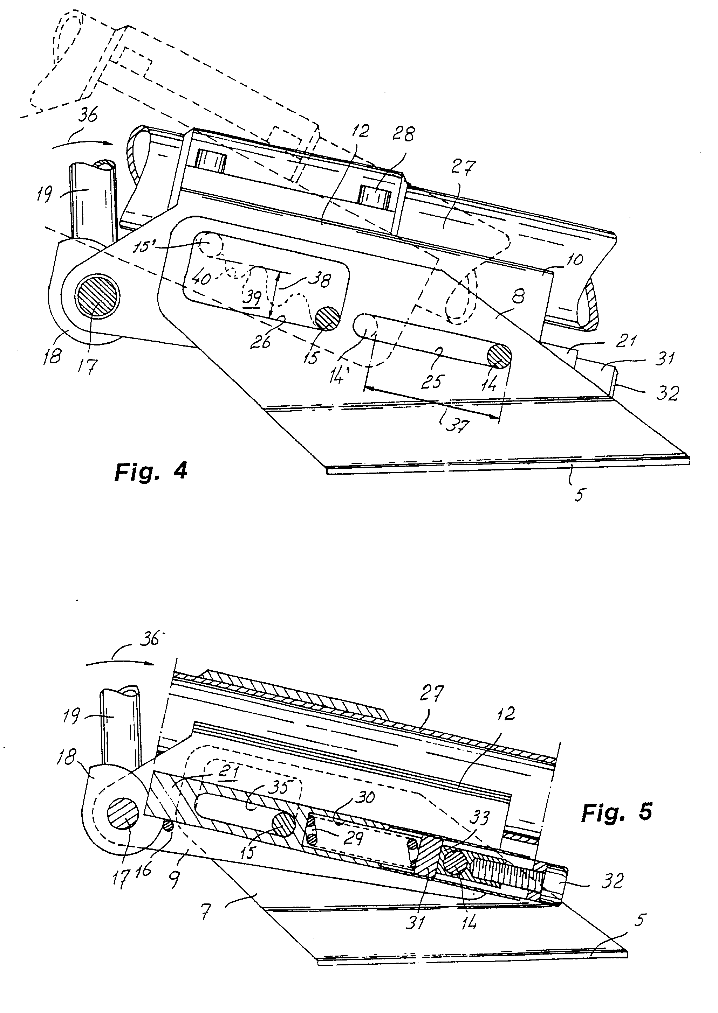

In the drawings Figure 1 is a perspective view of an adjustable steering column support according to the invention with the steering column removed for the sake of clearness. Figure 2 is a side view of the steering column support shown in Figure 1, partly in a transparent projection. Figure 3 is a cross section along line III—III of Figure 2. Figure 4 diagrammatically shows the maximum displacement and rotation for a steering column as mounted in the steering column support according to Figures 1—3. Figure 5 is a vertical cross section along line V—V of Figure 3 showing details of the locking device for the steering column support.

The steering column support shown in Figure 1 generally comprises a stationary part 1 adapted to be fixedly mounted in the vehicle, a steering column carrier 2 on which a part of the steering column is adapted to be mounted and which is displacable and rotatable in relation to the stationary part 1, a locking means 3 for interconnecting of the stationary part and actuation means 4 for releasing the steering column carrier for adjusting of the position of the steering wheel.

The steering column support is formed as two mutually interconnected halves which are mirror symmetrical and in which the locking means 3 and the actuation means 4 are mounted between said two halves.

In the illustrated case the stationary part 1 is formed with a mounting plate 5 which by means of mounting bores 6 can be mounted stationary at a suitable place of the vehicle. From the mounting plate 5 two locking plates 7 and 8 extend upwardly and are interleaved between three corresponding locking plates 9, 10 and 11 of the steering column carrier. It should be noted that the number of locking plates of the stationary part and the steering column carrier may be varied as wanted. In the most simple case both the stationary part and the steering column carrier has one single locking plate, but a safer locking is obtained with a less press force if the two cooperating parts are formed with several pairs of locking plates. In the illustrated case the outer locking plate 8 is fixed connected to the inner locking plate 7 at a place adjacent the mounting plate 5.

The steering column carrier 2 consists of, as mentioned, of three locking plates 9, 10 and 11, which at the top are interconnected, for instance be means of spot welding to a carrier plate 12 extending at an angle of the locking plates and to which a mounting means of the steering column can be mounted by means of bolts engaging the bores 13. For keeping the two pairs of the stationary parts and the steering column parts together there are, in this case, two through bolts 14 and 15, and as a spacing means the apparatus comprises a support pin 16 and the shaft 17 of a cam curve 18, which can be actuated by means of an outer handle 19.

The locking means 3 comprises a wedge means consisting of two outer wedges 20 which are fixed mounted in the steering column carrier and an inner movable wedge 21 which with a projecting portion is spring biassed to the cam curve 18 and is thereby guided and supported by the support pin 16. For the spring actuation of the wedge 21 there is a spring means 22 which will be closer explained in the following.

The steering column carrier 2 is axially and angularly displacable in relation to the stationary part 1, and for keeping the steering column carrier 2 in the outermost locking position there may be a tension spring 23 which acts between some parts of the steering column carrier, for instance the end of the bolt 14 and a part of the stationary support, for instance a projecting pin 24.

For making the displacement and the angle movement of the steering column carrier 2 possible in relation to the stationary part 1 either of the sets of locking plates 7—8 or 9—11 are formed with through slots. As best evident from Figures 2—4, in the illustrated case the locking plates 7 and 8 of the stationary part 1 are formed both with a longitudinal slot 25 in which the bolt 14 is movable, and also with a longitudinally extending wide slot 26 in which the bolt 15 is displacable in two directions which are perpendicularly to each other. With the bolt 14 as the rotation point the steering column carrier consequently can be moved axially and rotated within the space which is defined by the wider slot 26. The bolts 14 and 15 extend through bores in the locking plates 9—11 of the steering column carrier, and they are clamped to an exactly wanted distance between the plates. As shown in the drawings the steering column 27 is mounted in the carrier plate 12 by means of screw joints 28, and the steering column thereby assists in forming the steering column support to a solid integral unit.

In Figure 4 the steering column 27 is shown with full lines in its lowermost and most retracted position, and with the dotted lines the steering column is shown in its most extended and its highest angular position. It is evident that the bolt 14 in the illustrated position 14' is at the end of the slot 25 and that the bolt 15 in the position 15' is at the end position and at the upper edge of the wide slot 26. It is obvious that the steering column in its most extended position can be angularly rotated within the area which is defined by the width of the slot 26, that is until the bolt 15' comes into contact with the lower edge of the slot 26.

Previously mentioned and best illustrated in Figure 3 the locking means comprises two outer wedges 20 which are fixed mounted in the steering column carriers by means of the through bolts 14 and 15. Between the fixed wedges 20 there is a movable wedge 21, which with the outer end is in contact with the cam curve 18, and which can be tightened and pressed in the direction to the cam curve by means of two springs 29 which are mounted in cavities 30 of the inner wedge 21. For pressing and tightening the springs 29 there is a press means in the form of a piston 31, which is displacable in the same cavity 30 in which the springs 29 are mounted and which can be tightened by means of a tightening screw 30 which cooperates with a nut 33 which is mounted on the through bolt 14. When rotating the screw 32 in one direction the piston 31 is thus pressed inwardly in the inner wedge 21, and thereby compresses the spring 29. When rotating the screw 32 in the opposite direction the piston is pulled out of the inner wedge and the spring tension is reduced.

For making a displacement of the inner wedge possible, it is formed with through slots 34 and 35 in which the bolts 14 and 15 can move during the movement of the wedge. By the actuation of the pressure springs 29 the inner wedge 21 thereby constantly is pressed to the cam curve 18, whereby the inner wedge 21 forces the outer wedges 20 apart, and whereby the locking plates 7—11 are pressed together providing an effective locking of the steering column carrier in relation to the stationary part 1.

The apparatus works as follows. The normal position is supposed to be the one shown with full lines in Figure 4. For releasing the steering column support 2 with the steering column 27 from the stationary part 1 the handle 19 together with the cam curve 18 is rotated in the counter clockwise direction as shown with the arrow 36, whereby the wedge 21 by the cam curve 18 is pressed to the right. The press force between the outer wedges 20 and thereby between the locking plates 7, 8 and 9—11 respectively is released. Thereby the steering column carrier can be moved axially a distance corresponding to the distance 37 between the shaft 14—14' in the slot 25, and further the steering column carrier can be angularly moved over an angle which is defined by the vertical distance 38 between the shaft positions 15—15' in the slot 26. It is obvious that any wanted axial displacements and angular displacements may be made by varying the length of the slots 25 and 26. Of course the slot 26 can be formed as a narrow straight slot extending at an angle to the slot 25, and whereby the steering column automatically is raised when extended, or the slot 26 may be formed as any wanted curve for providing different effects. For instance the slot 26 can be formed as a four stage curve 39 as indicated in Figure 4, and whereby the lower parts 40 thereof give a further safety that the steering column is unintentionally displaced from the adjusted position in that the bolt 15' engages cavity portions of said lower parts 40.

As previously mentioned the locking action can be varied either by changing the spring pressure of the spring 29, by mounting differently strong springs 29 or by changing the edge angles of the wedges 20, 21 or varying the numbers of locking plates 7—8 and 9—11 respectively. By increasing the number of locking plates an increased locking effect is obtained, and thereby the spring force of the springs 29 may be correspondingly reduced. A reduced spring force of the springs 29 at the same time reduces necessary actuation force for the handle 19 for having the cam curve 18 press the inner wedge 21 back when re-adjusting the steering column.

After an adjustment of the steering column 27 has been made the handle 19 with the cam curve 18 is returned to its initial position in which the cam curve is steadily kept by the spring actuation of the inner ring 21.

## Claims

1. Tiltable and telescopic steering column support comprising a support part (1) which is fixedly mounted on the vehicle, a carrier (2) for the steering column, which is both tiltable and telescopic in relation to said fixed support part (1), a locking means (3) and a releasing means (4) for respectively locking and releasing of the carrier (2) and the fixed support part (1) in relation to each other,

in which the fixed support part (1) is formed with a first set of locking plates including two or more locking plates (7, 8), and the steering column carrier (2) is formed with a second set of locking plates including three or more locking plates (9, 10, 11) or vice versa, and in which the said first and second sets of locking plates (7—11) are interleaved for cooperation, said locking means (3) comprising a spring means (29),

the interleaved and cooperating locking plates (7—11) in the normal non-operated condition being acted on by said spring means (29) which compresses the interengaged locking plates (7—11) and thereby provides a locking engagement between the fixed support part (1) and the steering column carrier (2),

said releasing means (4), when actuated, forcing said spring means (29) in a direction for disengaging the locking plates on such operation and thereby releasing the steering column carrier (2) from the support part (1),

and in which the apparatus comprises means for enabling a displacement of the steering column carrier (2) longitudinally and angularly in relation to the support part (1) upon actuation of said releasing means (4), characterized

in that the fixed support part (1) and the steering column carrier (2) are formed as two mirror-symmetrical halves, which are interconnected for a maximum mutual distance by means of bolts (14, 15), the locking means (3) and the actuation means (4) being interposed between said two halves,

and in that said locking means (3) comprises a wedge means (20, 21) which is disposed between the two mirror-symmetrical halves of the fixed support part (1) and the steering column carrier (2), said wedge means having two outer wedges (20), which are mounted non-displacable in the longitudinal direction of said wedges (20) in relation to the releasing means (4), and an intermediate wedge (21) which is pressed in the direction towards the outer wedges (20) by said spring means (29), whereby said wedges provide a compressing of the locking plates (7, 8 and 9—11) of the stationary support part (1) and the steering column carrier (2).

2. Steering column support according to claim 1, characterized in that säid spring means comprises two or more pressure springs (29), and in that the intermediate wedge (21) has a cavity (30) enclosing said pressure springs (29) and a press piston (31) which by means of a screw and nut means (32, 33) can be pressed a large or small distance into said intermediate wedge (21) thereby pre-compressing the pressure springs (29) for adjusting the force by which the pressure springs (29) act upon the inner wedge (21).

3. Steering column support according to claim 1 or 2, characterized in that the releasing means (4) for releasing the steering column carrier (2) from the fixed support part (1) comprises a cam curve (18) which over a shaft (17) and a handle (19) can press the intermediate wedge (21) from press contact with the outer wedges (20) against the force of the pressure springs (29).

4. Steering column support according to any of claims 1 to 3, characterized in that the locking plates (7, 8) of the fixed support part (1) are formed with a first enlongated slot (25) having substantially the same width as the diameter of first cross bolt (14) extending therethrough and a second elongated slot (26) having a width which is substantially larger than the diameter of a second cross bolt (15) extending through said slot (26), so that the steering column carrier (2) together with the steering column (27) can be moved in the longitudinal direction of said first slot (25) and at the same time can be angularly displaced in the longitudinal and transversal direction of said second slot (26) to provide, at the same time, both a longitudinal and an angular displacement of the steering column and the steering wheel.

5. Steering column support according to claim 4, characterized in that the intermediate wedge is formed with longitudinal slots (34, 35) in which said first and second cross bolts (14, 15) move upon displacement of the intermediate wedge (21), and in that a screw-nut connection (32, 33) for the actuation of the press piston (31) is mounted on the closest cross bolt (14) for locking of the press piston (31) in relation to the stationary support part (1) and for varying the spring force of the pressure springs (29).

**Patentansprüche**

1. Schwenkbare und teleskopierbare Steuersäulenstütze, bestehend aus einem Abstützteil (1), welches starr an dem Fahrzeug montiert ist, einem Tragteil (2), für die Steuersäule, welches sowohl schwenkbar als auch teleskopierbar in bezug auf das feststehende Abstützteil (1) ist, einem Verriegelungsmittel (3) und einem Entriegelungsmittel (4) zum gegenseitigen Verriegeln respektive Entriegeln des Tragteiles (2) und des feststehenden Abstützteiles (1),

woei das feststehende Abstützteil (1) aus einem ersten Satz von Verriegelungsplatten mit zwei oder mehr Verriegelungsplatten (7, 8) geformt ist und das Steuersäulentragteil (2) aus einem zweiten Satz von Verriegelungsplatten, bestehend aus drei oder mehr Verriegelungsplatten (9, 10, 11), oder umgekehrt, geformt ist und die ersten und zweiten Sätze von Verriegelungsplatten (7 bis 11) zwecks Zusammenwirkens überlappend miteinander verschachtelt sind und das Verriegelungsmittel (3) ein Federelement (29) aufweist,

wobei die miteinander verschachtelten und kooperierenden Verriegelungsplatten (7 bis 11) in der normalen, nicht betätigten Stellung von dem Federmittel (29) beaufschlagt sind, welches die zusammenwirkenden Verriegelungsplatten (7 bis 11) zusammenpreßt und dadurch ein Zusammenwirken im Verriegelungssinne zwischen dem feststehenden Abstützteil (1) und dem Steuersäulentragteil (2) bewirkt,

wobei das Entriegelungsmittel (4) bei seiner Betätigung die Federmittel (29) in eine Richtung zum Lösen der Verriegelungsplatten zwingt und dadurch das Steuersäulentragteil (2) von dem Abstützteil (1) löst,

und wobei die Vorrichtung Mittel aufweist, die ein Verstellen des Steuersäulentragteiles (2) in Längsrichtung und im Winkel in bezug auf das Abstützteil (1) infolge einer Betätigung des Entriegelungsmittels (4) ermöglichen,

dadurch gekennzeichnet, daß

das feststehende Abstützteil (1) und das Steuersäulentragteil (2) aus zwei spiegelsymmetrischen Hälften gebildet sind, die im Sinne eines maximalen gegenseitigen Abstandes mittels Bolzen (14, 15) miteinander verbunden sind, wobei das Verriegelungsmittel (3) und das Betätigungsmittels (4) zwischen den zwei Hälften eingefügt ist, und daß

das Verriegelungsmittel (3) ein Keilelement (20, 21) aufweist, welches zwischen den zwei spiegelsymmetrischen Hälften des feststehenden Abstützteiles (1) und des Steuersäulentragteiles (2) angeordnet ist, wobei das Keilelement zwei äußere Keile (20) aufweist, die unverrückbar in longitudinaler Richtung der Keile (20) in bezug auf das Entriegelungsmittel (4) montiert sind, und ferner einen zwischengeordneten Keil (21) aufweist, der in Richtung auf die äußeren Keile (20) mittels eines Federelementes (29) gepreßt wird, wodurch diese Keile eine Kompression der Verriegelungsplatten (7, 8 und 9 bis 11) des feststehenden Abstützteiles (1) und des Steuersäulentragteiles (2) ermöglichen.

2. Steuersäulenstütze nach Anspruch 1, dadurch gekennzeichnet, daß Federelement zwei oder mehr Druckfedern (29) und daß der zwischengeordnete Keil (21) eine Aussparung (30) aufweist, die die Druckfeder (29) umschließt, und ein Preßkolben (31) vorgesehen ist, der mittels einer Schraube und einer Mutter (32, 33) eine größere oder kleinere Distanz in den zwischengeordneten Keil (21) preßbar ist und dadurch den Druck der Feder (29) vorspannt, um die Kraft einzustellen, durch die die Druckfeder (29) auf den inneren Keil (21) einwirken.

3. Steuersäulenstütze nach Anspruch 1 oder 2, dadurch gekennzeichnet, daß das Entriegelungsmittel (4) zum Entriegeln des Steuersäulentragteiles (2) von dem feststehenden Abstützteil (1) eine Kurvenscheibe oder einen Nocken (18) aufweist, die/der über eine Welle (17) und einen Handgriff (19) den zwischengeordneten Keil (21) vom Preßkontakt mit den äußeren Keilen (20) gegen die Kraft der Druckfedern (29) fortdrücken kann.

4. Steuersäulenstütze nach einem der Ansprüche 1 bis 3, dadurch gekennzeichnet, daß die Verriegelungsplatten (7, 8) des feststehenden Abstützteiles (1) mit einem ersten Längsschlitz (25) versehen sind, der im wesentlichen die gleiche Breite aufweist wie der Durchmesser des ersten durch ihn sich erstreckenden Durchgangsbolzen (14) und ferner versehen sind mit einem zweiten Längsschlitz (26), der eine Breite aufweist, die im wesentlichen größer als der Durchmesser eines zweiten durch den Schlitz (26) sich erstreckenden Durchgangsbolzen (15) ist, so daß das Steuersäulentragteil (2) mit der Steuersäule (27) gemeinsam in longitudinaler Richtung des ersten Schlitzes (25) bewegbar ist und zur gleichen Zeit in der longitudinalen und traversalen Richtung des zweiten Schlitzes (26) winkelverstellbar ist, um, zur gleichen Zeit, sowohl eine longitudinale als auch eine winkelmäßige Verstellung der Steuersäule und des Steuerrades zu ermöglichen.

5. Steuersäulenstütze nach Anspruch 4, dadurch gekennzeichnet, daß der zwischengeordnete Keil mit longitudinalen Schlitzen (34, 35) versehen ist, in denen die ersten und zweiten Durchgangsbolzen (14, 15) sich bei einer Verschiebung des zwischengeordneten Keiles (21) bewegen, und daß eine Schrauben/Mutter-Verbindung (32, 33) zur Betätigung des Preßkolbens (31) auf dem nächstliegenden Durchgangsbolzen (15) montiert ist, um den Preßkolben (31) in bezug auf das feststehende Abstützteil (1) festzulegen und die Federkraft der Druckfedern (29) zu variieren.

## Revendications

1. Support de colonne de direction inclinable et télescopique, comprenant une partie support (1) qui est montée fixe sur le véhicule, une monture (2) pour la colonne de direction, qui est à la fois inclinable et

télescopique par rapport à ladite partie support fixe (1), des moyens de blocage (3) et des moyens de déblocage (4) servant respectivement à bloquer et à débloquer la monture (2) et la partie support fixe (1) l'une par rapport à l'autre,

dans lequel la partie support fixe (1) est munie d'un premier jeu de plaques de blocage, qui comprend deux ou plus de deux plaques de blocage (7, 8) et la monture de colonne de direction (2) est munie d'un deuxième jeu de plaques de blocage, qui comprend trois ou plus de trois plaques de blocage (9, 10, 11) ou viceversa, et dans lequel le premier et le deuxième jeux de plaques de blocage (7—11) sont imbriqués pour coopérer entre eux, lesdits moyens de blocage (3) comprenant un moyen à ressorts (29),

les plaques de blocage (7—11), qui sont imbriquées et coopèrent entre elles, subissant, dans l'état normal, non actionné, l'action dudit moyen à ressorts (29) qui comprime les plaques de blocage (7—11) en prise entre elles et, de cette façon, établissent une prise de blocage entre la partie support fixe (1) et la monture de colonne de direction (2),

lesdits moyens de déblocage (4), lorsqu'ils sont actionnés, contraignant ledit moyen à ressorts (29) dans un sens approprié pour dégager les plaques de blocage lors de cette maneouvre et libérant de cette façon la monture de colonne de direction (2) de la partie support (1),

et dans lequel le dispositif comprend des moyens destinés à permettre un déplacement la monture de colonne de direction (2) longitudinalement et angulairement par rapport à la partie support (1) lorsqu'on actionne lesdits moyens de déblocage (4), caractérisé

en ce que la partie support fixe (1) et la monture de colonne de direction (2) sont réalisées sous la forme de deux moitiés symétriques l'une de l'autre par rapport à un plan, qui sont assemblées à l'aide de boulons (14, 15) de manière à pouvoir prendre une distance d'écartement mutuel maximale, les moyens de blocage (3) et les moyens d'actionnement (4) étant interposés entre ces deux moitiés,

et en ce que ledit moyen de blocage (3) comprend un moyen à coins (20, 21) qui est disposé entre les deux moitiés symétriques de la partie support fixe (1) et de la monture de colonne de direction (2), ledit moyen à coins possédant deux coins extérieurs (20) qui sont montés fixes dans la direction longitudinale desdits coins (20) par rapport aux moyens de déblocage (4), et un coin intermédiaire (21) qui est pressé en direction des coins extérieurs (20) par ledit moyen à ressorts (29), de sorte que lesdits coins assurent une compression des plaques de blocage (7, 8 et 9—11) de la partie support fixe (1) et de la monture de colonne de direction (2).

2. Support de colonne de direction selon la revendication 1, caractérisé en ce que ledit moyen à ressorts comprend deux ou plus de deux ressorts de compression (29) et en ce que le coin intermédiaire (21) présente une cavité (30) qui renferme lesdits ressorts de compression (29) et un piston presseur (31) qui, à l'aide d'un moyen à vis et écrou (32, 33), peut être pressé à une distance plus ou moins grande dans ledit coin intermédiaire (21), en précomprimant de cette façon les ressorts de compression (29) pour régler la force avec laquelle les ressorts de compression (29) agissent sur le coin intérieur (21).

3. Support de colonne de direction selon la revendication 1 ou la revendication 2, caractérisé en ce que le moyen de déblocage (14) servant à débloquer la monture de colonne de direction (2) de la partie support fixe (1) comprend une came (18) qui sur

un arbre (17) et une poignée (19), peut presser le coin intermédiaire (21) hors du contact de pression avec les coins extérieurs (20) à l'encontre de la force des ressorts de compression (29).

4. Support de colonne de direction selon l'une quelconque des revendications 1 à 3, caractérisé en ce que les plaques de blocage (7, 8) de la partie support fixe (1) sont munies d'une première fente allongée (25) possédant une largeur sensiblement égale au diamètre d'un premier boulon transversal (14) qui la traverse, et d'une deuxième fente allongée (26) ayant une largeur qui est sensiblement plus grande que le diamètre d'un deuxième boulon transversal (15) qui traverse ladite fente (26), de sorte que la monture de colonne de direction (2), conjointement avec la colonne de direction (27), peut être déplacée dans la direction longitudinale de ladite première fente (25) et que, en même temps, elle peut être déplacée angulairement dans la direction longitudinale et transversale de ladite deuxième fente (26) pour assurer simultanément à la fois un déplacement longitudinal et un déplacement angulaire de la colonne de direction et du volant de direction.

5. Support de colonne de direction selon la revendication 4, caractérisé en ce que le coin intermédiaire est muni de fentes longitudinales (34, 35) dans lesquelles lesdits premier et deuxième boulon transversaux (14, 15) se déplacent lors du déplacement du coin intermédiaire (21) et en ce qu'une liaison à vis et écrou (32, 33) destinée à l'actionnement du piston presseur (31) est montée sur le boulon transversal le plus proche (14) pour bloquer le piston presseur (31) par rapport à la partie support fixe (21) et pour faire varier la force élastique des ressorts de compression (29).

**Fig. 1**

0 121 506

Fig. 2

Fig. 3

2

**Fig. 4**

**Fig. 5**